# EUROPEAN PATENT APPLICATION

(11) **EP 4 541 502 A1**
(43) Date of publication of application: **23.04.2025**
(21) Application number: 23823177.3
(22) Date of filing: 14.06.2023
(51) Int. Cl.: B23K 35/30, B23K 35/40

(54) **LOW-NICKEL HIGH-MANGANESE AUSTENITE WEAR-RESISTANT STEEL WELDING WIRE ROD AND WELDING WIRE**

(30) Priority: 14.06.2022 CN 202210669120
(71) Applicant: BAOSHAN IRON & STEEL CO., LTD., Shanghai 201900 (CN)
(72) Inventor: WU, Wei, Shanghai 201900 (CN); WANG, Baosen, Shanghai 201900 (CN); QIAN, Weifang, Shanghai 201900 (CN); XU, Ke, Shanghai 201900 (CN)
(74) Representative: Kuhnen & Wacker Patent- und Rechtsanwaltsbüro PartG mbB
(86) International application number: PCT/CN2023/100119
(87) International publication number: WO 2023/241611

(57) **Abstract**

A low-nickel high-manganese austenite wear-resistant steel welding wire rod, containing Fe and inevitable impurity elements, and further containing the following chemical elements in percentage by mass: C: 0.05-0.20%, Mn: 5.5-9.0%, Si: 0.2-1.0%, Cr: 16.0-21.0%, Ni: 3.0-5.0%, Nb: 0.10-0.17%, Ti: 0.10-0.20%, N: 0.12-0.17%, and Mo: 0.80-1.25%. Also disclosed are a low-nickel high-manganese austenite wear-resistant steel welding wire, a manufacturing method for the low-nickel high-manganese austenite wear-resistant steel welding wire rod, and a manufacturing method for the low-nickel high-manganese austenite wear-resistant steel welding wire. The welding wire of the present invention can form a full austenite weld during the welding process, and match the welding characteristics of a high-carbon high-manganese wear-resistant steel base material, thereby avoiding the problem of cold cracks that may occur during the welding process of the high-carbon high-manganese austenite wear-resistant steel.

## Description

### Technical Field

The present disclosure relates to a welding wire rod and a welding wire, in particular to a welding wire rod and a welding wire of wear-resistant austenitic steel.

### Background Art

It's well known in the field of welding that, in order to ensure weld quality, designing welding wire rods and welding wires to meet different requirements in use has always been a focus that draws the attention of design researchers.

In the current prior art, stainless steel welding wires falling in the scope of ASME SFA5.9-5.9M Standard "Technical Conditions for Stainless Steel Welding Wires and Filler Wires" hitherto in force are mainly used for welding stainless steel, and the corrosion resistance matching with stainless steel is given priority consideration in the design of the stainless-steel welding wire composition.

Differing from this traditional concept for designing stainless steel welding wires, the present inventors have designed a completely different composition system with the use of alloying elements in hope of obtaining novel welding wire rods and welding wires of wear-resistant low-nickel high-manganese austenitic steel to match the welding characteristic of wear-resistant high-carbon high-manganese steel base materials, thereby effectively avoiding the cold cracking problem in the welding process of wear-resistant high-carbon high-manganese austenitic steel, and in turn, ensuring that the welded joints can achieve advantageous overall performance.

In the current prior art, although the researchers in the art have developed and designed a good number of welding wire rods and welding wires that meet the welding requirements of various types of steel materials, the technical solution of the present disclosure has not been disclosed yet.

For example, Japanese Patent Application JP 2013-86134 published on May 13, 2013 discloses a high-strength steel welding wire that can weld high-strength steel with a tensile strength of 950 MPa without preheating and provide a high-strength and high-toughness welded joint, and its composition is C: 0.03-0.08%, Si: 0.2-1.0%, Mn: 0.3-3.0%, Ni: 4.0-7.0%, Cr: 11.5-15.0. Compared with the welding wire rod and welding wire designed according to the present disclosure, the contents of the Mn and Cr elements as the main components in the technical solution of this patent application are outside of the ranges of the element contents designed according to the present disclosure, and the stabilizing elements Ti and Nb are absent.

For another example, Patent Application WO2013055700 published on April 18, 2013 and titled "WAFER LEVEL APPLIED RF SHIELDS" discloses an austenitic welding wire having chemical composition of C: 0.1%, Si: 0.8%, Mn: 1.5-5.5%, Ni: 8-15%, Cr: 18-24%, Al<0.05%, and N: 0.15-0.35%.

For still another example, Patent Application WO2012157542 published on July 31, 2014 and titled "WELDING MATERIAL AND WELDED JOINT" discloses a welding wire for welding SUS310 stainless steel, wherein a low Mn and high Cr composition system is designed, and the chemical composition is C < 0.02%, Si < 2%, Mn < 2%, Cr: 26-50%, N < 0.15%, P < 0.02%, S < 0.002%, 5 ≤ Ni ≤ Cr-14.

### Summary

One of the objects of the present disclosure is to provide a wear-resistant low-nickel high-manganese austenitic steel welding wire rod. By optimizing the design of the chemical element composition of the wear-resistant low-nickel high-manganese austenitic steel welding wire rod per se, the contents of alloying elements can be reduced while ensuring that the deposited metal has a fully austenitic structure, and matches the welding characteristic of the wear-resistant high-carbon high-manganese steel base material to obtain good plasticity and toughness as well as resistance to cold cracking, thereby solving the problems of large cold cracking tendency and poor welding quality stability that occur when using the existing wear-resistant high-carbon high-manganese austenitic steel for welding.

In order to achieve the above object, the present disclosure provides a wear-resistant low-nickel high-manganese austenitic steel welding wire rod, comprising Fe and unavoidable impurity elements, as well as the following chemical elements in percentage by mass:
C: 0.05-0.20%, Mn: 5.5-9.0%, Si: 0.2-1.0%, Cr: 16.0-21.0%, Ni: 3.0-5.0%, Nb: 0.10-0.17%, Ti: 0.10-0.20%, N :0.12-0.17%, Mo: 0.80-1.25%.

Further, in the wear-resistant low-nickel high-manganese austenitic steel welding wire rod of the present disclosure, the mass percentages of the various chemical elements are:
C: 0.05-0.20%, Mn: 5.5-9.0%, Si: 0.2-1.0%, Cr: 16.0-21.0%, Ni: 3.0-5.0%, Nb: 0.10-0.17%, Ti: 0.10-0.20%, N: 0.12-0.17%, Mo: 0.80-1.25%; a balance of Fe and unavoidable impurity elements.

In the above technical solution of the present disclosure, by designing the chemical composition reasonably, a novel wear-resistant austenitic steel welding wire rod has been designed with the use of a low-nickel high-manganese Ni-Cr-Mn-Fe alloy system according to the present disclosure. In the design of the chemical composition of the wear-resistant low-nickel high-manganese austenitic steel welding wire rod, the content of the Mn element in the wire rod is increased to replace the Ni element to ensure that the weld metal obtained by welding with the welding wire prepared subsequently has a fully austenitic structure, while an advantage of low cost is achieved. Accordingly, the Cr element is further added to the wear-resistant low-nickel high-manganese austenitic steel welding wire rod to obtain high strength. At the same time, a small amount of Ti, Nb, Mo, N and other elements are added appropriately.

In the wear-resistant low-nickel high-manganese austenitic steel welding wire rod of the present disclosure, the various chemical elements are designed according to the following principles:
Mn: In the wear-resistant low-nickel high-manganese austenitic steel welding wire rod described in the present disclosure, the mass percentage of the Mn element, the main alloying element, is controlled within the range of 5.5-9.0%, which can ensure that the mass percentage of the Mn element is comparable to that in the composition of the wear-resistant high-manganese steel base material, ensuring a composition system that is basically the same as that of the base material.

In the present disclosure, by adding the high-manganese austenite-forming element, it can be ensured that stable austenite is formed in the weld joint to prevent it from transforming into martensite at low temperatures. At the same time, since there is no gradient change of the Mn element concentration, abrupt changes in the structure and properties of the fusion zone of the weld joint can also be avoided. Besides, the addition of a high content of the Mn element can also increase the solubility of the N element in austenite. At the same time, Mn can combine with S more easily than Fe. The addition of a sufficient amount of Mn allows for formation of stable MnS, thereby effectively eliminating the thermal cracking problem that may occur to the welding wire rod during the welding process.

C: In the wear-resistant low-nickel high-manganese austenitic steel welding wire rod described in the present disclosure, the inventors increase the content of the C element to promote the C element to form fine dispersed carbides with other elements, so as to improve the strength of the weld joint formed using the welding wire rod during welding, thereby meeting the requirements of using the wear-resistant steel for welding in the fields of coal mining machinery, engineering machinery manufacturing, etc. By matching the contents of the Cr element and the C element, the present disclosure can improve the toughness of the weld structure while ensuring the high strength of the weld, thereby effectively preventing loading failure of the welded structure of the wear-resistant steel. Therefore, in order to bring into play the beneficial effects of the C element, in the wear-resistant low-nickel high-manganese austenitic steel welding wire rod described in the present disclosure, the mass percentage of the C element is controlled in the range of 0.05-0.20%.

Si: In the wear-resistant low-nickel high-manganese austenitic steel welding wire rod described in the present disclosure, Si is an important deoxidizing element, and it can play a deoxidizing role. At the same time, the addition of an appropriate amount of the Si element to the welding wire rod can also improve the fluidity of the molten metal, thereby inhibiting generation of welding defects. However, it should be noted that the content of the Si element in the welding wire rod should not be too high. If the Si content is too high, intermetallic compounds, represented by σ phase, will be easily generated. Therefore, in the wear-resistant low-nickel high-manganese austenitic steel welding wire rod described in the present disclosure, the mass percentage of the Si element is controlled in the range of 0.2-1.0%. In some embodiments, the Si content is 0.4-0.8%.

Cr: In the wear-resistant low-nickel high-manganese austenitic steel welding wire rod described in the present disclosure, Cr is an important solid solution strengthening element. The Cr element can be solidly dissolved in the matrix and cause lattice distortion, generating an elastic stress field. At the same time, the Cr element can also reduce the stacking fault energy of the solid solution to a certain extent, thereby improving the weld strength significantly. In order to guarantee the ability to solid solution strengthen the weld metal and achieve strength matching, the content of the Cr element in the welding wire rod needs to be controlled at 16.0% or higher. However, it should be noted that the content of the Cr element should not be too high. When the content of the Cr element exceeds 21.0%, intermetallic compounds, represented by σ phase, will be formed in the center of the weld, resulting in degraded welding performance and poor weld toughness. Therefore, in the wear-resistant low-nickel high-manganese austenitic steel welding wire rod described in the present disclosure, the mass percentage of the Cr element is controlled in the range of 16.0-21.0%.

Ni: In the wear-resistant low-nickel high-manganese austenitic steel welding wire rod described in the present disclosure, the Ni, C and Mn elements are all austenite-forming elements. Under the joint action of these three elements in the weld metal, it can be ensured that austenite is the initial solidification phase in the weld pool, and an austenitic weld structure is formed at room temperature. At the same time, the addition of the Ni element to the welding wire rod allows for reduction of the C content and improves weld toughness and plasticity. Therefore, with both the need of a low-cost welding wire for use and the desired plasticity and toughness of the weld metal taken into consideration, in the present disclosure, the mass percentage of the Ni element is controlled in the range of 3.0-5.0%.

Nb, Ti: In order to ensure refinement of the solidification structure of the weld metal in the process of welding wear-resistant high-manganese steel, in the wear-resistant low-nickel high-manganese austenitic steel welding wire rod described in the present disclosure, the inventors also add Ti and Nb to the chemical composition system of the welding wire rod. Ti and Nb are important elements for refining the weld metal.

The Ti and Nb elements form dispersed particles of carbides and nitrides of Ti and Nb in the weld. The particles precipitate and become solidification nuclei of the ferrite phase, making the weld metal structure finer, thereby improving the strength and toughness of the weld joint effectively. However, it should be noted that the contents of the Ti and Nb elements in the welding wire rod should not be too high. When the contents of the Ti and Nb elements are too high, the plasticity and toughness of the weld will decrease. Therefore, in view of the overall functions of the various elements in the present disclosure, in the wear-resistant low-nickel high-manganese austenitic steel welding wire rod described in the present disclosure, the mass percentage of the Nb element is controlled in the range of 0.10-0.17%, and the mass percentage of the Ti element is controlled in the range of 0.10-0.20%.

N: In the wear-resistant low-nickel high-manganese austenitic steel welding wire rod described in the present disclosure, N is a strong solid solution strengthening element and also a strong austenite-forming element. It's desirable in the present disclosure that the resulting deposited metal has a fully austenitic structure, and a certain amount of the N element combines with the Ti and Nb elements to form nitride particles to achieve the refinement of the weld metal structure. With the above requirements taken into consideration, the N element needs to be added in an amount of 0.12% or higher in the present disclosure. However, the content of the N element in the welding wire rod should not be too high. If there is excessive N, pores will be generated as welding defects. In addition, during the welding process, excessive N also tends to result in nitrides which lead to reduced toughness and corrosion resistance of the steel. Therefore, in the wear-resistant low-nickel high-manganese austenitic steel welding wire rod described in the present disclosure, the mass percentage of the N element is controlled in the range of 0.12-0.17%.

Mo: In the wear-resistant low-nickel high-manganese austenitic steel welding wire rod described in the present disclosure, the addition of the Mo element can increase the stability of carbides and improve the strength of the weld metal. In addition, the Mo element can form a composite cementite with the Fe and C elements, thereby improving the ductility, toughness and wear resistance of the weld. Therefore, in order to bring into play the beneficial effects of the Mo element, in the wear-resistant low-nickel high-manganese austenitic steel welding wire rod described in the present disclosure, the mass percentage of the Mo element is controlled in the range of 0.80-1.25%.

Further, in the wear-resistant low-nickel high-manganese austenitic steel welding wire rod described in the present disclosure, among the unavoidable impurity elements, P≤0.002%, S≤0.001%.

In the above technical solution, the P and S elements are both impurity elements in the wear-resistant low-nickel high-manganese austenitic steel welding wire rod described in the present disclosure. If the technical conditions permit, in order to obtain a steel material with better performances and higher quality, the contents of the impurity elements in the welding wire rod should be reduced as much as possible.

In the present disclosure, the presence of the impurity elements S and P will increase the risk of generating liquefaction cracks and reheating cracks in the weld metal. It's necessary to strictly control the contents of the S and P elements in the present disclosure to satisfy: S≤0.001%, P≤0.002%, and minimize the contents of S and P via composition control, so as to avoid formation of low melting eutectic in the weld metal and reduce the tendency of thermal cracking of the weld.

Further, in the wear-resistant low-nickel high-manganese austenitic steel welding wire rod described in the present disclosure, the deposited metal has a fully austenitic structure.

Further, in the wear-resistant low-nickel high-manganese austenitic steel welding wire rod described in the present disclosure, the properties of the deposited metal satisfy: an elongation at room temperature (about 20 degrees Celsius) of 22-30%, an impact toughness at room temperature of 90-143 J/cm²; a yield strength of 681-720 MPa; and a tensile strength of 790-853 MPa.

Accordingly, another object of the present disclosure is to provide a wear-resistant low-nickel high-manganese austenitic steel welding wire. With the use of the wear-resistant low-nickel high-manganese austenitic steel welding wire, there is no need for preheating in the process of welding, or for a post-weld heat treatment process. The welding difficulty can be reduced, and the heat treatment cost can be saved. Thus, a low-cost advantage is achieved.

In order to achieve the above object, the present disclosure proposes a wear-resistant low-nickel high-manganese austenitic steel welding wire made from the above wear-resistant low-nickel high-manganese austenitic steel welding wire rod described in the present disclosure. Specifically, the chemical element composition of the welding wire of the present disclosure is the same as the chemical element composition of the wear-resistant low-nickel high-manganese austenitic steel welding wire rod, comprising Fe and unavoidable impurity elements, and further comprising the following chemical elements in the following mass percentages: C: 0.05-0.20%, Mn: 5.5-9.0%, Si: 0.2-1.0%, Cr: 16.0-21.0%, Ni: 3.0-5.0%, Nb: 0.10-0.17%, Ti: 0.10-0.20%, N: 0.12-0.17%, Mo: 0.80-1.25%. Further, in the wear-resistant low-nickel high-manganese austenitic steel welding wire described in the present disclosure, the mass percentages of the various chemical elements are as follows: C: 0.05-0.20%, Mn: 5.5-9.0%, Si: 0.2-1.0%, Cr: 16.0-21.0%, Ni: 3.0-5.0%, Nb: 0.10-0.17%, Ti: 0.10-0.20%, N: 0.12-0.17%, Mo: 0.80-1.25%; a balance of Fe and unavoidable impurity elements.

In the above technical solution of the present disclosure, the deposited metal of the resulting wear-resistant low-nickel high-manganese austenitic steel welding wire has a fully austenitic structure. It can form a fully austenitic weld during the welding process and matches the welding characteristic of the wear-resistant high-carbon high-manganese steel base material. The welding wire can be used for welding a wear-resistant high-carbon high-manganese austenitic steel body, thereby avoiding the cold cracking problem that may occur during the process of welding the wear-resistant high-carbon high-manganese austenitic steel.

Further, in the wear-resistant low-nickel high-manganese austenitic steel welding wire described in the present disclosure, the properties of the deposited metal satisfy: an elongation at room temperature (about 20 degrees Celsius) of 22-30%, an impact toughness at room temperature of 90-143 J/cm²; a yield strength of 681-720 MPa; and a tensile strength of 790-853 MPa.

Of course, the wear-resistant low-nickel high-manganese austenitic steel welding wire designed according to the present disclosure has a very wide range of applicability. It is not limited to welding wear-resistant high-carbon high-manganese austenitic steel. In some embodiments, it can also be used effectively for welding dissimilar steel such as martensite/bainite strengthened wear-resistant steel, structural steel, and cast steel.

Further, the wear-resistant low-nickel high-manganese austenitic steel welding wire described in the present disclosure is used for gas metal arc welding.

Further, when the wear-resistant low-nickel high-manganese austenitic steel welding wire described in the present disclosure is used for welding, no preheating is performed.

Further, when the wear-resistant low-nickel high-manganese austenitic steel welding wire described in the present disclosure is used for welding, no post-weld heat treatment is performed.

Compared with the prior art, the wear-resistant low-nickel high-manganese austenitic steel welding wire rod and welding wire of the present disclosure have the following advantages and beneficial effects:
In the present disclosure, the inventors have designed a low-nickel high-manganese composition system. By controlling the content of the main alloying element, Mn, within the range of 5.5-9.0%, it's ensured that the resulting welding wire rod and welding wire have basically the same composition system as the wear-resistant high-carbon high-manganese austenitic steel base material. In addition, in the chemical composition design, by adding a high content of Mn and controlling the P and S elements, the tendency of thermal cracking in the welding process can be avoided effectively.

On the other hand, in the wear-resistant low-nickel high-manganese austenitic steel welding wire designed according to the present disclosure, Mn is used to replace Ni, leading to effective reduction of the alloy cost. At the same time, with the use of the wear-resistant low-nickel high-manganese austenitic steel welding wire made from the wear-resistant low-nickel high-manganese austenitic steel welding wire rod described in the present disclosure, there is no need for preheating in the process of welding, or for a post-weld heat treatment process. The welding difficulty can be reduced, and the heat treatment cost can be saved. Thus, a low-cost advantage is achieved.

In addition, the deposited metal of the wear-resistant low-nickel high-manganese austenitic steel welding wire has a fully austenitic structure. It can form a fully austenitic weld in the process of welding, and matches the welding characteristic of the wear-resistant high-carbon high-manganese steel base material to obtain good plasticity and toughness as well as resistance to cold cracking, thereby solving the problems of large cold cracking tendency and poor welding quality stability that occur when using the wear-resistant high-carbon high-manganese austenitic steel for welding. The deposited metal formed using the wear-resistant low-nickel high-manganese austenitic steel welding wire rod and welding wire has a yield strength in the range of 681-720MPa, a tensile strength in the range of 790-853MPa, an elongation at room temperature in the range of 22-30%, and an impact toughness at room temperature in the range of 90-143J/cm². The strength, plasticity and toughness meet the requirements for manufacturing wear-resistant mining machinery equipment from wear-resistant high-carbon high-manganese steel.

In respect of practical use, the wear-resistant low-nickel high-manganese austenitic steel welding wire described in the present disclosure can be used for welding a wear-resistant high-carbon high-manganese austenitic steel body, thereby avoiding the cold cracking problem that may occur during the process of welding the wear-resistant high-carbon high-manganese austenitic steel.

Of course, the wear-resistant low-nickel high-manganese austenitic steel welding wire designed according to the present disclosure has a very wide range of applicability. It is not limited to welding wear-resistant high-carbon high-manganese austenitic steel. In some embodiments, it can also be used effectively for welding dissimilar steel such as martensite/bainite strengthened wear-resistant steel, structural steel, and cast steel.

The present disclosure further provides a method for manufacturing the wear-resistant low-nickel high-manganese austenitic steel welding wire rod, comprising smelting the composition described herein, and then subjecting the wire rod blank obtained by smelting to rolling and solid solution treatment. During the rolling step, the temperature for heating the wire rod blank in a furnace can be 930-1160°C. The temperature of the wire rod blank exiting the furnace can be 1080-1160°C. The initial rolling temperature can be 1000-1080°C, and the final rolling temperature can be ≥900°C (such as 900-980°C). The rolling speed can be 60-75m/s. The cooling process after rolling can be air cooling and/or water cooling. The temperature of the solid solution treatment can be 1040-1120°C, and the holding time can be from 40 minutes to 60 minutes. The cooling process after the solid solution treatment is water cooling.

The wire rod may be drawn using a drawing process well known in the art to produce the welding wire of the present disclosure. An exemplary drawing process comprises: performing stress relief treatment at 890-910°C when necessary, followed by air cooling; and finally drawing once to form the welding wire.

### Detailed Description

The wear-resistant low-nickel high-manganese austenitic steel welding wire rod and welding wire described in the present disclosure will be further explained and illustrated with reference to the specific Examples below. Nevertheless, such explanation and illustration do not constitute any improper limitation to the technical solution of the present disclosure.

### Examples 1-6

The wear-resistant low-nickel high-manganese austenitic steel welding wires of Examples 1-6 described in the present disclosure were all prepared with the following steps:
(1) The chemical compositions shown in Table 1 were smelted and rolled to obtain the wear-resistant low-nickel high-manganese austenitic steel welding wire rods corresponding to Examples 1-6. The key points of the process for manufacturing the welding wire rods are as follows: the temperature for heating the wire rod blanks in the furnace was 930-1160°C; the temperature of the wire rod blanks exiting the furnace was 1080-1160°C; the initial rolling temperature was 1000-1080°C; the final rolling temperature was ≥900°C; the rolling speed was 60-75m/s; air cooling was performed after rolling; the temperature of the solid solution treatment was 1040-1120°C; the holding time was from 40 minutes to 60 minutes; and the cooling process after the solid solution treatment was water cooling. The specific process is shown in Table 2.
(2) Drawing: The main process control parameters are as follows: stress relief treatment was performed at 890-910°C, followed by air cooling; and finally, drawing was performed once to form the wear-resistant low-nickel high-manganese austenitic steel welding wires of Example 1-6, with the diameter of the welding wires being controlled to be 1.2 mm.

In the present disclosure, the inventors have imposed no special limitations on the smelting, rolling or drawing step in the above manufacturing process. Operators can select conventional process means known in the art to implement these steps in light of the chemical composition design they use, so as to obtain the wear-resistant low-nickel high-manganese austenitic steel welding wire rods and welding wires in Examples 1-6.

It should be noted that the chemical compositions designed for the wear-resistant low-nickel high-manganese austenitic steel welding wire rods and welding wires in Examples 1-6 all meet the specification requirements designed according to the present disclosure.

Table 1 lists the mass percentages of the various chemical elements in the wear-resistant low-nickel high-manganese austenitic steel welding wire rods and welding wires in Examples 1-6.

**Table 1. (wt%, the balance is Fe and other unavoidable impurities besides P and S)**

| No. | Chemical Elements | | | | | | | | | | |
|---|---|---|---|---|---|---|---|---|---|---|---|
| | C | Si | Mn | P | S | Cr | Ni | Ti | N | Nb | Mo |
| Ex. 1 | 0.05 | 0.75 | 8.91 | 0.0012 | 0.0005 | 16.4 | 2.97 | 0.10 | 0.17 | 0.17 | 0.80 |
| Ex. 2 | 0.19 | 0.44 | 5.53 | 0.0018 | 0.0009 | 20.86 | 4.95 | 0.20 | 0.12 | 0.10 | 1.09 |
| Ex. 3 | 0.10 | 0.45 | 6.92 | 0.0015 | 0.0005 | 20.46 | 3.81 | 0.16 | 0.17 | 0.17 | 1.24 |
| Ex. 4 | 0.07 | 0.65 | 7.93 | 0.0014 | 0.0005 | 17.3 | 3.48 | 0.14 | 0.15 | 0.15 | 0.91 |
| Ex. 5 | 0.13 | 0.46 | 6.32 | 0.0016 | 0.0007 | 19.57 | 4.12 | 0.16 | 0.14 | 0.17 | 1.17 |
| Ex. 6 | 0.17 | 0.43 | 5.87 | 0.0016 | 0.0008 | 20.69 | 4.64 | 0.18 | 0.12 | 0.13 | 1.12 |

Table 2 lists the preparation process in each Example.

**Table 2**

| No. | Heating temperature in furnace (°C) | Temperature of wire rod blank exiting furnace (°C) | Initial rolling temperature (°C) | Final rolling temperature (°C) | Rolling speed (m/s) | Solid solution treatment temperature (°C) | Holding time (min) |
|---|---|---|---|---|---|---|---|
| Ex. 1 | 930 | 1100 | 1080 | 900 | 68 | 1080 | 40 |
| Ex. 2 | 980 | 1080 | 1050 | 950 | 65 | 1120 | 45 |
| Ex. 3 | 1160 | 1120 | 1000 | 980 | 70 | 1100 | 60 |
| Ex. 4 | 1120 | 1160 | 1030 | 930 | 60 | 1040 | 50 |
| Ex. 5 | 1000 | 1140 | 1010 | 940 | 75 | 1110 | 48 |
| Ex. 6 | 1040 | 1130 | 1060 | 920 | 72 | 1070 | 55 |

The finished products of the wear-resistant low-nickel high-manganese austenitic steel welding wires with a diameter of 1.2 mm obtained through the above process steps in Examples 1-6 were sampled respectively, and cladding welding was particularly performed using a gas metal arc welding method. In the welding process, the wear-resistant low-nickel high-manganese austenitic steel welding wire samples of Examples 1-6 didn't need to be preheated or post-weld heat treated.

In order to verify the excellent properties of the deposited metal obtained by welding with the wear-resistant low-nickel high-manganese austenitic steel welding wires of Examples 1-6, the inventors further sampled the deposited metal obtained by welding with the wear-resistant low-nickel high-manganese austenitic steel welding wires of Examples 1-6, observed the microstructure of the deposited metal obtained in each Example, and tested its mechanical properties. The test results of the mechanical properties are listed in Table 2 below.

The methods for testing the relevant properties are as follows:
(1) Tensile property test: A tensile test was conducted in accordance with GB/T 228.1-2010 to test the yield strength, tensile strength and elongation of the deposited metal obtained by welding with the wear-resistant low-nickel high-manganese austenitic steel welding wires of Examples 1-6. In the tensile test, in order to ensure the accuracy of the test results, the measurement was conducted twice for each Example, and the final result was the average value of the two measurements.
(2) Impact property test: An impact test was performed in accordance with GB/T 229-2007 to test the impact toughness of the deposited metal obtained by welding with the wear-resistant low-nickel high-manganese austenitic steel welding wires of Examples 1-6 at room temperature. When the impact test was performed on the corresponding deposited metal of each Example, for the sake of the accuracy of the test results, the measurement was conducted three times for each Example, and the final result was the average value of the three measurements, used as the impact toughness value.

Table 3 lists the observation results and mechanical property test results of the deposited metal obtained by welding with the wear-resistant low-nickel high-manganese austenitic steel welding wires of Examples 1-6.

**Table 3**

| No. | Microstructure of deposited metal | Yield strength (MPa) | | Tensile strength (MPa) | | Elongation (%) | | Impact toughness at room temperature (J/cm²) | |
|---|---|---|---|---|---|---|---|---|---|
| | | Two measuremen ts | Average | Two measurements | Average | Two measurements | Average | Separate values | Average |
| Ex. 1 | Fully austenitic structure | 681/682 | 681.5 | 851/853 | 852 | 29.5/30.5 | 30 | 97/96/90 | 94 |
| Ex. 2 | Fully austenitic structure | 698/704 | 701 | 798/790 | 799 | 25.8/26.5 | 26.15 | 140/135/154 | 143 |
| Ex. 3 | Fully austenitic structure | 720/714 | 717 | 827/813 | 820 | 22.0/23.6 | 22.8 | 86/89/95 | 90 |
| Ex. 4 | Fully austenitic structure | 691/689 | 690 | 831/842 | 836.5 | 28.2/27.8 | 28 | 103/110/104 | 106 |
| Ex. 5 | Fully austenitic structure | 717/712 | 714.5 | 809/817 | 813 | 23.8/24.6 | 24.4 | 114/127/121 | 121 |
| Ex. 6 | Fully austenitic structure | 705/711 | 708 | 810/803 | 806.5 | 25.6/24.8 | 25.2 | 137/126/133 | 132 |

As it can be seen from Table 3 above, in the present disclosure, the deposited metal obtained by welding with the wear-resistant low-nickel high-manganese austenitic steel welding wire of each of Examples 1-6 had a fully austenitic structure, and the deposited metal had excellent mechanical properties in each case, with the yield strength being in the range of 681.5-717 MPa, the tensile strength being in the range of 799-852 MPa, the elongation at room temperature being in the range of 22.8-30%, and the impact toughness at room temperature being 90 J/cm² or higher.

It should be noted that the wear-resistant low-nickel high-manganese austenitic steel welding wires of Examples 1-6 in the present disclosure were obtained by further drawing the wear-resistant low-nickel high-manganese austenitic steel welding wire rods of Examples 1-6 obtained in step (1) according to the present disclosure. Therefore, the above structure and properties of the deposited metal can also be viewed as the structure and properties of the deposited metal as if obtained with the corresponding wear-resistant low-nickel high-manganese austenitic steel welding wire rod of each Example.

To sum up, it can be seen that the wear-resistant low-nickel high-manganese austenitic steel welding wire manufactured using the technical solution of the present disclosure can ensure formation of stable austenite in the weld, provide good plasticity and toughness as well as resistance to cold cracking, and solve the problems of large cold cracking tendency and poor welding quality stability that occur when using the wear-resistant high-carbon high-manganese austenitic steel for welding.

At the same time, the deposited metal obtained by welding with the wear-resistant low-nickel high-manganese austenitic steel welding wire can satisfy the requirements of strength, plasticity and toughness for manufacturing wear-resistant mining machinery equipment from wear-resistant high-carbon high-manganese steel. At the same time, it can be ensured that the weld metal obtained under process conditions without preheating and post-heating has good plasticity and resistance to cold cracking.

In practical application, the wear-resistant low-nickel high-manganese austenitic steel welding wire designed according to the present disclosure may be used mainly for welding a wear-resistant high-manganese austenitic steel body. Of course, in some embodiments, it can also be used for welding dissimilar steel such as martensite/bainite strengthened wear-resistant steel, structural steel, and high-strength cast steel.

In the wear-resistant low-nickel high-manganese austenitic steel welding wire designed according to the present disclosure, the Mn element replaces the Ni element, thereby reducing the alloy cost effectively. In addition, with the use of the wear-resistant low-nickel high-manganese austenitic steel welding wire, there is no need for preheating in the process of welding, or for a post-weld heat treatment process. The welding difficulty can be further reduced, and the heat treatment cost can be saved. Thus, a low-cost advantage is achieved.

It should be noted that the combinations of the various technical features in this case are not limited to the combinations described in the claims of this case or the combinations described in the specific Examples. All technical features recorded in this case can be combined or associated freely in any way unless there is a contradiction between them.

It should also be noted that the Examples listed above are only specific embodiments of the present disclosure. Obviously, the present disclosure is not limited to the above Examples, and variations or modifications made to them can be derived directly or contemplated easily by those skilled in the art from the contents of the present disclosure, and should all fall within the protection scope of the present disclosure.

## Claims

1. A wear-resistant low-nickel high-manganese austenitic steel welding wire rod, comprising Fe and unavoidable impurity elements, as well as the following chemical elements in percentage by mass: C: 0.05-0.20%, Mn: 5.5-9.0%, Si: 0.2-1.0%, Cr: 16.0-21.0%, Ni: 3.0-5.0%, Nb: 0.10-0.17%, Ti: 0.10-0.20%, N: 0.12-0.17%, Mo: 0.80-1.25%.

2. The wear-resistant low-nickel high-manganese austenitic steel welding wire rod according to claim 1, wherein the chemical elements have the following mass percentages:
C: 0.05-0.20%, Mn: 5.5-9.0%, Si: 0.2-1.0%, Cr: 16.0-21.0%, Ni: 3.0-5.0%, Nb: 0.10-0.17%, Ti: 0.10-0.20%, N: 0.12-0.17%, Mo: 0.80-1.25%; a balance of Fe and unavoidable impurity elements.

3. The wear-resistant low-nickel high-manganese austenitic steel welding wire rod according to claim 1 or 2, wherein among the unavoidable impurity elements, P≤0.002%, S≤0.001%.

4. The wear-resistant low-nickel high-manganese austenitic steel welding wire rod according to claim 1 or 2, wherein deposited metal has a fully austenitic structure.

5. The wear-resistant low-nickel high-manganese austenitic steel welding wire rod according to claim 1 or 2, wherein deposited metal has properties satisfying: an elongation at room temperature of 22-30%, an impact toughness at room temperature of 90-143 J/cm²; a yield strength of 681-720 MPa; and a tensile strength of 790-853 MPa.

6. A wear-resistant low-nickel high-manganese austenitic steel welding wire made using the wear-resistant low-nickel high-manganese austenitic steel welding wire rod according to any one of claims 1-5.

7. The wear-resistant low-nickel high-manganese austenitic steel welding wire according to claim 6, wherein the welding wire is used for gas metal arc welding.

8. The wear-resistant low-nickel high-manganese austenitic steel welding wire according to claim 6, wherein no preheating is performed in welding.

9. The wear-resistant low-nickel high-manganese austenitic steel welding wire according to claim 6, wherein no post-weld heat treatment is performed in welding.

10. A method for manufacturing the wear-resistant low-nickel high-manganese austenitic steel welding wire rod according to any one of claims 1-5, comprising: smelting a composition according to any one of claims 1-3, and then subjecting a wire rod blank obtained by smelting to rolling and solid solution treatment.

11. The method according to claim 10, wherein during the rolling, a temperature for heating the wire rod blank in a furnace is 930-1160°C; a temperature of the wire rod blank exiting the furnace is 1080-1160°C; an initial rolling temperature is 1000-1080°C; a final rolling temperature is ≥900°C; a rolling speed is 60-75m/s; and air cooling is performed after the rolling.

12. The method according to claim 10, wherein during the solid solution treatment, a temperature of the solid solution treatment is 1040-1120°C; a holding time is from 40 minutes to 60 minutes; and a cooling process after the solid solution treatment is water cooling.

13. A method for manufacturing the wear-resistant low-nickel high-manganese austenitic steel welding wire according to any one of claims 6-9, wherein the method comprises drawing the wear-resistant low-nickel high-manganese austenitic steel welding wire rod according to any one of claims 1-5.

14. The method according to claim 13, wherein the drawing comprises: performing stress relief treatment at 890-910°C, followed by air cooling; and finally drawing once to form the welding wire.
